# EUROPEAN PATENT APPLICATION

(11) **EP 0 851 701 A2**
(43) Date of publication of application: **01.07.1998**
(21) Application number: 97122792.1
(22) Date of filing: 23.12.1997
(51) Int. Cl.: H04Q 7/38, H04Q 11/04

(54) **Hand-off control technique for wireless ATM network**

(30) Priority: 24.12.1996 US 773738; 10.10.1997 US 948612; 21.11.1997 JP 321737/97
(71) Applicant: NEC CORPORATION, Tokyo (JP)
(72) Inventor: Acharya, Arup, North Brunswick, New Jersey 08902 (JP); Li, Jun, Piscataway, New Jersey 08854 (JP); Raychaudhuri, Dipankar, Princeton Junction, New Jersey 08550 (JP); Yuan, Ruixi, Waltham, Massachusetts 02154 (JP); Miyahara, Keiichi, Minato-ku, Tokyo (JP)
(74) Representative: Baronetzky, Klaus, Dipl.-Ing.

(57) **Abstract**

A handoff control process in a wireless ATM network replaces a communication connection via old base station with a new communication connection via new base station. In order to guarantee that no data is lost during the reconfigurationj process, an ATM cell level mechanism is used to re-schedule the buffering and transmitting of data streams of the virtual channels (VCs) to be handed-off. In addition, this mechanism is transparent to user applications. The present invention performs three fundamental cell level scheduling functions. The first function is to mark and redirect ATM cell transmission with operation and maintenance (OAM) cells. The second function is to disable and buffer ATM cell transmission until the new path is connected. The third function is to enable ATM cell transmission, starting with the buffered cells across the connected new path.

## Description

### Background of the Invention:

The present invention relates to a signaling framework for supporting mobility in a wireless ATM network. Specifically, the invention refers to wireless control protocols for handoff between base stations and mobile terminals.

ATM technology is playing an increasingly important role in future broadband networks and it is expected that there will be an emergence of "wireless ATM" networks enabling multimedia access for mobile end systems. Consequently, mobility support in an ATM network assumes increasing importance.

Wireless personal communication services (PCS) and broadband networking for delivery of multimedia information represent two well-established trends in telecommunications. While technologies for PCS and broadband communications have historically been developed somewhat independently, harmonization into a single architectural framework is motivated by an emerging need to extend multimedia services to portable terminals, as well as by service integration and operational efficiency considerations. Now that ATM is viewed as a universal base technology for broadband networks. It is reasonable to consider of standard ATM services into next-generation microcellular wireless/PCS scenarios. D. Raychaudhuri and N. D. Wilson, in an article entitled "ATM-based Transport Architecture for Multiservices Wireless Personal Communication Networks", IEEE Journal on Selected Areas of Communications, vol. 12, no. 8, 1994, pp. 1401-1414 and in an article entitled "Multimedia transport in next Generation Personal Communication Networks", Proc. of ICC, May 1994, pp. 858-862, propose an architecture for "wireless ATM" in which broadband services are extended over shared radio channels via incorporation of suitable medium access control (MAC) and data link control (DLC) layers into the standard ATM protocol stack. Medium access control is the subject of U.S. patent application serial no. 08/495,164 entitled "Multiservices Medium Access Control Protocol for Wireless ATM System" and data link control is the subject of U.S. patent application serial no, 08/553,168 entitled "Data Link Control Protocols for Wireless ATM Access Channels", both assigned to the same assignee as the present invention, and both incorporated herein by reference. The present invention concerns the related signaling, syntax and protocols required to support mobility in such a wireless ATM system. While some early work on the handoff aspects has been reported by A. Acampora and M. Nahchineh in an article entitled "An Architecture and Methodology for Mobile-Executed Handoff in Cellular ATM Networks", IEEE journal on Selected Areas of Communications, vol. 12, no. 8, pp. 1365-1375, 1994 and by L.V. Hauwemeiren et al in an article entitled "Requirements for Mobility Support in ATM", Proc. of Globecom, 1994, pp. 1691-1694, further conceptual developments is required to define a complete framework for handoff control in ATM.

Once a connection has been established between a source and a terminal, current protocols assume that the connection paths does not change during the life of a connection. This assumption is invalid when the terminal is a mobile terminal. In such cases, special handoff protocols are required.

The key issue in the design of efficient handoff protocols are:
1. During the re-routing of active connections, it is necessary to insure that minimal cells are lost.
2. Determination of an optional cross-over joint (from where to reroute an existing connection to the new mobile terminal) is crucial to the quality of the rerouted connection.
3. Before a mobile terminal can hand over to a new base station, it is necessary to determine that the quality of service (QOS) contacts for the existing connection can be met by the new connection, i.e. the call admission control (CAC) module is ready to accept the rerouted connection.
4. A mobile terminal may have multiple active connections to one or more terminals where it is handed off. The connection can either be rerouted indirectly or may be rerouted/extended as a group.

The present invention provides efficient handoff techniques to support mobility within an ATM network. As an ATM connection is handed off from a first base station to a second base station, there is either a partial path re-routing of the signal from the source to the second base station or there is a path extended to the second base station.

U. S. Patent No. 5,487,065 entitled "Method and Apparatus for Supporting Mobile Communications in Asynchronous Transfer Mode Based Networks" describes an ATM based network where the handoff is distributed, as contrasted with a centralized network. A communication route is determined which includes a connection from a base station via a switching node. A connection tree is determined to include potential connection from other base stations to the switching node. When the mobile user moves from one cell to another, corresponding to a change in base stations within the connection tree, the call is automatically handed over or rerouted to another route within the connection tree.

In this case, a cell loss inevitably takes place during the hand-off operation when the conventional protocol is used.

For example, it is necessary in the wireless ATM network for transmission and reception of an ATM cell to avoid a cell loss or duplication of ATM cell during the hand-off which is carried out to switch a base station communicating with the mobile terminal to another base station due to movement of the mobile terminal.

Herein, let a conventional portable telephone system be considered which mainly handles a digitized audio signal. In this case, each user transmits a data stream at a period of 2 milliseconds. In such audio transmission, no fatal problem occurs even when the loss or duplication of data packets takes place over several periods. Therefore, no consideration is made in the conventional portable telephone system for a zero cell loss hand-off operation.

However, such a cell loss or duplication of an ATM cell adversely and seriously affects a quality of communication between terminals in a wireless ATM communication system for a wide band communication service because not only an audio signal but also a data stream is transmitted between the terminals.

On the other hand, proposal has been made as regards a wireless ATM communication system which controls data transmission (stop/start) communication by the use of a control signal transmitted or received between the mobile terminal and the base stations. In this case, a data cell from each user is transmitted through a data link path which is different from that of transmitting a control cell for the control signal. This makes it difficult to avoid the cell loss and the duplication within a short processing time.

### Summary of the Invention:

It is an object of this invention to provide a wireless ATM communication method which can suppress hand over latency or hand-off latency and can avoid cell loss and cell duplication.

It is another object of this invention to provide a wireless ATM communication method of the type described, which can maintain quality of service for a cell which is dynamically rerouted.

It is still another object of this invention to provide a wireless ATM communication method of the type described, which can effectively utilize a network resource.

It is yet another object of this invention to provide a wireless ATM communication method of the type described, which dispenses with formation of a static connection tree and which enables dynamic extension or rerouting of an existing connection as a mobile terminal is moved.

It is another object of this invention to provide an ATM switch and a mobile terminal which can carry out a hand-off without a loss of any ATM cell and which can support mobility of each mobile terminal in an ATM network.

A first preferred method is referred to as partial path re-routing. This method is based on removing a portion of the existing connection and adding a new sub-path from the point of detachment to the mobile terminal. After the mobile terminal is handed off, the portion of the existing connection from the handoff switch to the original mobile terminal is replaced by a new subpath from the handoff switch to the new mobile terminal which is created and spliced to the original connection from the source to the handoff switch. This protocol is described generally in an article by R. Yuan et al entitled "A Signaling and Control Architecture for Mobility Support in Wireless ATM Network", Proc. of ILC, June 1996.

A second preferred method is referenced to as path extension. This method extends an active connection from the previous base station to the new base station. The method is that after handoff, the new connection includes the existing connection from the source to a mobile terminal followed by an additional sub-path (extension) from the previous base station to the new base station.

According to an aspect of this invention, there is provided a method for mobile-communications connections and routing in a network including base stations, a mobile terminal, a remote terminal, switches, a hand-off switch and datapath links comprises the steps of establishing a communications connection from a remote terminal to a mobile terminal via a first datapath link, including said hand-off switch, a first switch, and a first base station, signaling from said mobile terminal to said first base station when a hand-off is to occur, signaling from said first base station to a second base station via a second datapath link and a second switch requesting a hand-off, signaling from said second base station to said first base station that a second datapath link from said hand-off switch to said second base station via said second switch is available, signaling from said hand-off switch to said first switch and said second switch to change datapath links from said first datapath link to said second datapath link, and signaling from said first base station to said mobile terminal to change communications from said first base station to said second base station.

Herein, it is to be noted that the hand-off switch will often be called a cross over switch (COS) hereinafter.

According to another aspect of this invention, there is provided a method for mobile-communications connections and routing in a network including base stations, a mobile terminal, a remote terminal switches, and datapath links. The method comprises the steps of establishing a communications connection from a remote terminal to a mobile terminal via a first datapath link including a first switch and a first base station, signaling from said mobile terminal to said first base station when a hand-off is to occur, signaling from said first base station to a second base station via a second datapath link including a second switch requesting a hand-off while establishing a second datapath link from aid first base station to said second base station via said first switch and said second switch, signaling from said second base station to said first base station that said second datapath link is established, and signaling from said first base station to said mobile terminal to change communications from said first base station to said second base station and sending data from said first base station to said second base station via said second datapath link.

According to a further aspect of this invention, there is provided a wireless ATM communication method for use in a system which comprises a mobile terminal and a wired network communicable with the mobile terminal through an ATM cell, the method comprises the steps of inserting a specific OAM cell in a stream of user cells between the mobile terminal and the wired network when a hand-off procedure is initiated by the mobile terminal, and carrying out a hand-off operation by the use of the specific OAM cell.

According to yet further aspect of this invention, there is provided a wireless ATM communication method where the system comprises a base station which has a first datapath link to the mobile terminal and another base station which is to form a second datapath link to the above-mentioned mobile terminal, the hand-off operation is carried out by switching the first data path link to the second data path link, while the OAM cell inserting step is carried out at the mobile terminal and comprising the steps of producing a first OAM cell which is representative of the last cell transmitted before the hand-off operation, inserting, as the specific OAM cell, the first OAM cell in the user cell stream, producing a second OAM cell which is representative of the first ATM cell transmitted after the hand-off operation, and inserting, as the specific OAM cell, the second OAM cell in the user cell stream.

### Brief Description of the Drawing:

Fig. 1 is a network diagram of a typical ATM network that supports mobility;
Fig. 2 is a representation of a preferred ATM protocol stack;
Fig. 3 is a diagram illustrating VC segmentation and rerouting;
Fig. 4 is an illustration of a typical inter-switch handoff;
Fig. 5 is a graphical representation of the signal flow during the handoff process;
Fig. 6 is a schematic representation of the signaling messages during handoff in accordance with a preferred embodiment of the invention;
Fig. 7 is a state transition diagram for a mobile terminal during handoff in accordance with a preferred embodiment of the invention;
Fig. 8 is a state transition diagram for a handoff switch during handoff in accordance with a preferred embodiment of the invention;
Fig. 9 is a state transition diagram for an initial base station during handoff in accordance with a preferred embodiment of the invention;
Fig. 10 is a state transition diagram for a subsequent base station during handoff in accordance with a preferred embodiment of the invention;
Fig. 11 is a schematic representation of the signaling messages during handoff in accordance with an alternative preferred embodiment of the invention;
Fig. 12 is a state transition diagram for a mobile terminal during handoff in accordance with an alternative preferred embodiment of the invention;
Fig. 13 is a state transition diagram for loop removal of looping point (HOS) during handoff in accordance with an alternative preferred embodiment of the invention;
Fig. 14 is a state transition diagram for loop removal at an initial base station during handoff in accordance with an alternative preferred embodiment of the invention;
Fig. 15 is a state transition diagram for an initial base station during handoff in accordance with an alternative preferred embodiment of the invention;
Fig. 16 is a state transition diagram for a subsequent base station during handoff in accordance with an alternative preferred embodiment of the invention;
Fig. 17 is a diagram of a typical mobile ATM network architecture;
Fig. 18 describes a sequence of signals and cells in the handoff process of the preferred embodiment;
Figs. 19 through 22 show a flowchart of the handoff process in the preferred embodiment;
Figs. 23 through 25 contain a flowchart of the handoff process in an alternate embodiment;
Fig. 26 describes the sequence of signals and cells in the handoff process of an alternate embodiment; and
Fig. 27 shows a block diagram of a mobile for use in a wireless ATM communication system according to this invention.

### Description of the Preferred Embodiment:

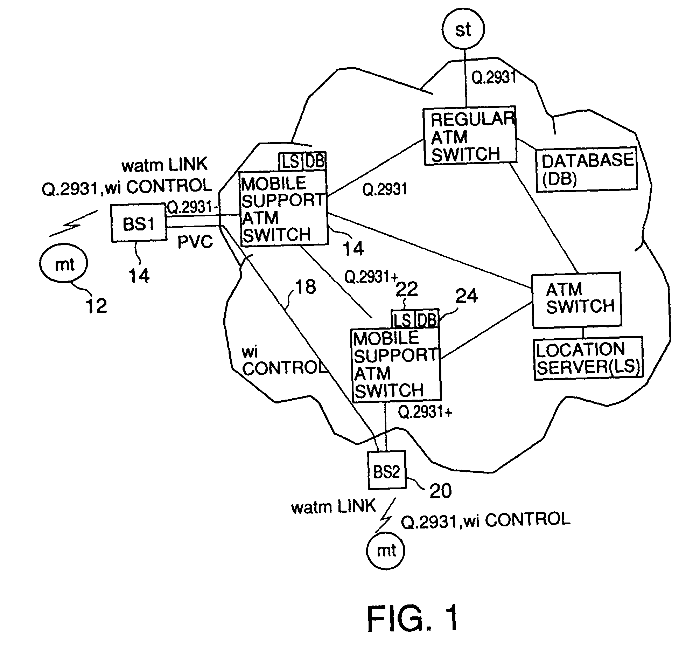

Referring now to the figures and to Fig. 1 in particular, there is shown a network diagram that illustrates the various network components and functions that may comprise an ATM network, that supports mobility. That is, a wireless ATM network intended to support integrated broadband services to mobile terminals.

As shown in Fig. 1, the mobile terminal is a complete ATM end system that is capable of supporting multimedia applications. It uses a standard ATM signaling protocol (Q.2931, ATM Forum UNI3.1) for connection establishment between end system. The wireless link between a mobile terminal (MT) 12 and base station (BS) 14 provides the desired ATM transport services to the mobile terminal. A mobility enhanced signaling protocol based on the ITU recommendation Q.2931 (termed Q.2931) is used by the MT, BS and MSS (mobility support switches) 16 to support handoff related functions. In addition, wireless control protocols are used between base stations 14, 20 to facilitate wireless resource management and sequential cell delivery during handoffs. This custom protocol is supported via permanent virtual circuits (PVC) 18 between neighboring base stations 14 and 20.

The location registration and resolution functions are performed by the location servers (LS) 22 and database (DB) systems 24 which coexists with the network switch element. In the present invention, the location management is decoupled from the connection management system. Such decoupling permits the independent operation and optimization of location updates scheme. It also enables efficient support of the connectionless data service in the network.

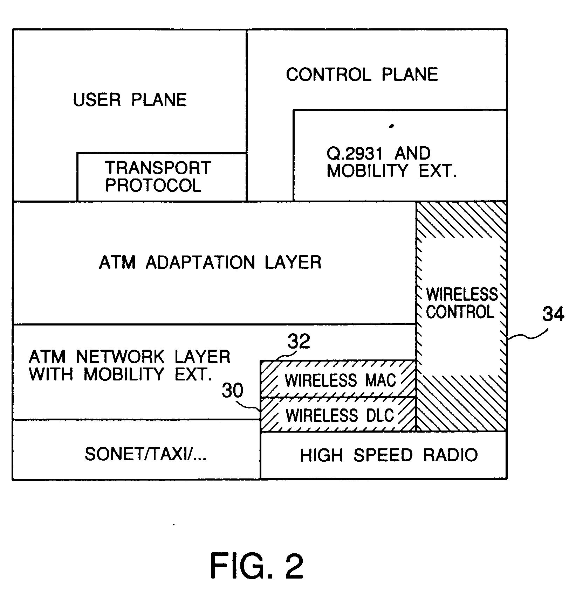

The architecture is based on an integration of the wireless and mobility specific functions into the standard ATM protocol stack. The user plane and control plane are shown in Fig. 2 where the wireless MAC (medium access control) 30, wireless DLC (data link control) 32 and wireless control 34 represent new layers added for wireless ATM support. The function of wireless MAC and wireless DLC layers is to provide a standard ATM transport service across the shared/unreliable wireless (radio) channel. The wireless control protocol supports management functions at these layers, while interfacing with higher layer (ATM) control functions.

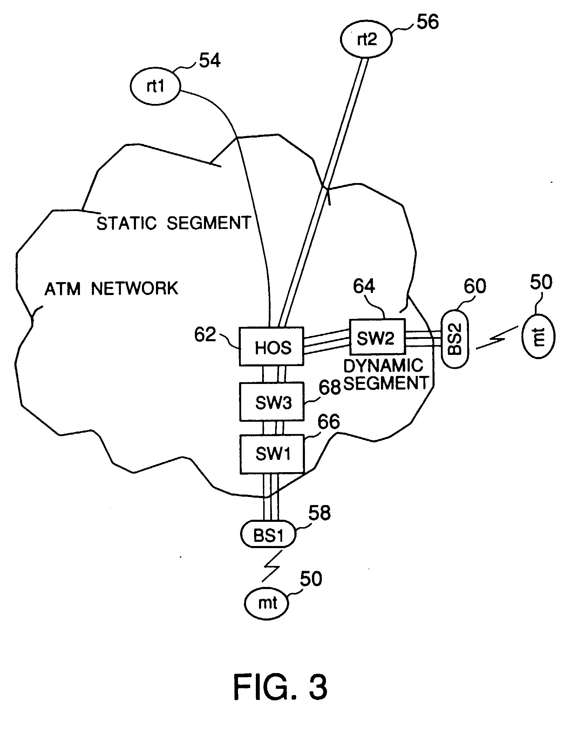

In an ATM network, the end-to-end virtual connection is constructed by link-by-link VCs connected through different network switches. The handoff of a mobile terminal between different base stations is the dynamic reconfiguration of the end-to-end VCs under the constraint of QOS requirements of the connections. To simplify the approach, the end-to-end VCs are separated into two segments: the static and dynamic segments (note that in the case of connection between two MTs, the end-to-end VC may be separated into three segments, but from the perspective of one MT during re-configuration, the two segments scenario still applies). Such an arrangement is shown in Fig. 3, where a mobile terminal MT 50 has three active connections from two remote terminals (RT) 54, 56, one from RT1 54 and two from RT2 56. When the MT migrates from the coverage area of BS1 58 into the coverage area of BS2 60, these connections are reconfigured by creating three new segments from the handoff switch (HOS) 62 to BS2 60 via switch SW2 54, and changing the VC routing table at the HOS 62. This is applicable as well to the concept of VC grouping, where active connections of the MT are grouped and reconfigured in a collective manner.

The Handoff Switch (HOS) which will be also referred to as a cross over switch is the mobility supporting switch that anchors the entire handoff process. By cooperating with BS1 58 and BS2 60, the HOS 62 establishes a group of new dynamic segments and then connects them with the original static segments.

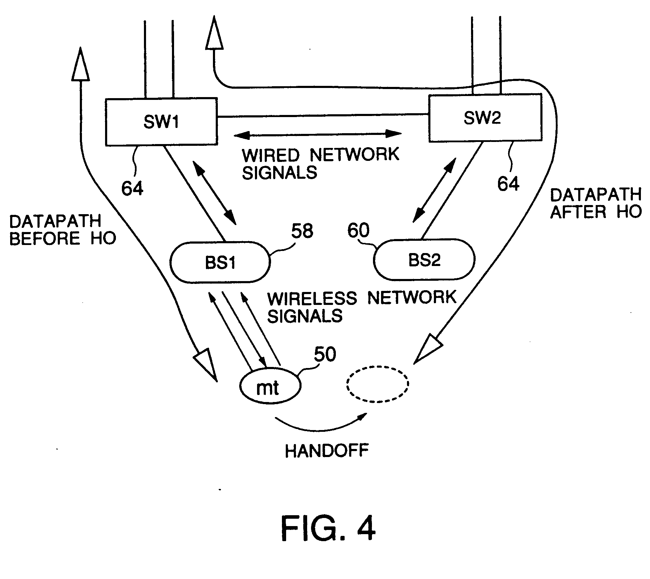

A general inter-switch handoff arrangement is shown in Fig. 4. As the mobile terminal 50 migrates away from BS1 58 and towards the cell coverage area of BS2 60, the mobile terminal listens to the beacon signals from both base stations. The mobile terminal can suggest when to initiate a handoff from BS1 to BS2 based on its measurements of the BS beacons. The mobile terminal sends an HO_INDICATION signal to the base station using the wireless control protocol between MT50 and BS 58. The HO_INDICATION signal includes multiple potential handoff candidates.

Upon receiving the HO_INDICATION signal from the mobile terminal, BS1 58 uses the wireless control protocol between base stations to contact the handoff candidate base stations through the PVC established between base stations. In this example, the primary candidate BS2 60 acknowledges the availability of resources.

After receiving the acknowledgement from BS2, BS1 sends an HO_REQUEST message to the handoff switch. The selection of the HOS can be based on the route optimization for the multiple connections and various QOS requirements. It is also possible to have multiple HOSs handle multiple connections. However, for implementation simplicity, it is assumed that there is only one HOS. The HOS then establishes a datapath to the targeted base station via the fixed network signaling scheme (Q.2931). After the alternate datapath is established, the HOS sends a HO_REQ_ACK message to BS1 58.

Assured of the establishment of an alternate datapath, BS1 sends a HO_START message to the mobile terminal through the wireless control channel. In the meantime, it sends a RT_CHANGE signal to the switch to instruct the switch to change the datapath from the original to the newly established connections via switch 64 instead of via switch 66. After receiving the HO_START from BS1 58, the mobile terminal changes its operating frequency and starts communicating through BS2 60. From the description above, the handoff procedures may be summarized as follows:

New base station 60 (BS2) identification. Both the mobile terminal 50 and the base stations 58, 60 can coordinate the selection. Usually, a BS beacon serves the purpose of base station identification and SIR/BER measurement.

HOS selection. The handoff switch can be selected based on the route optimization from multiple connections and a series of QOS considerations. The easiest selection is the current switch serving the mobile terminal. This is the switch where all the connections to the mobile terminal transit. The possibility that another mobile terminal within the same base station coverage can establish a connection to MT 50 directly through the base station without involving the switch is excluded.

New mobile segments establishment. A group of new mobile segments are established together between HOS 62 and BS2 60, and BS2 can allocate the wireless resources for the mobile terminal before actual handoff.

VC routing. The HOS 62 reroutes the connections by connecting the original static segments with the new mobile segments. At the same time, BS1 58 instructs the mobile terminal to switch to the new base station.

Cell resequencing. The old base station transfers the wireless datalink states information to the new base station. This guarantees the in-sequence delivery of ATM cells.

Route Optimizing. Optionally, the route Optimization can be treated separately from the handoff process, as long as the HOS provides reasonable robustness to avoid obvious loops.

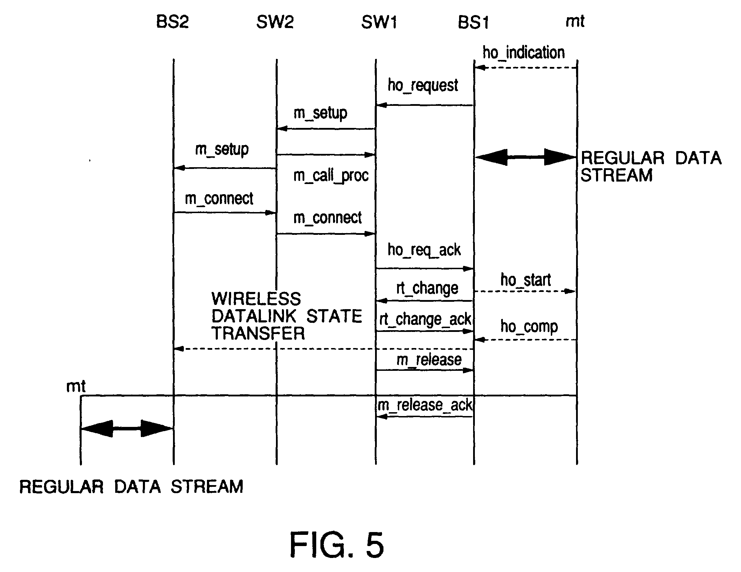

In the above inter-switch handoff example SW1 66 acts as the HOS, the signaling flow during the handoff process is shown in Fig. 5. Several signal messages are used to achieve the MT handoff between the two base stations. However, current ATM signaling protocol standard does not have the mobility support functions. Thus, several extensions to the ATM signaling protocols are disclosed to facilitate mobility support in an ATM network. Table 1 is a list of the extension signals, their functionalities and the information elements (IE).

| Signal Message | Functions | Information Elements |
|---|---|---|
| HO_REQUEST | Request HOS to initiate the handoff process | MT address, new BS address, multiple connection identifiers |
| HO_REQ_ACK | Acknowledges HO_REQUEST | MT address, new BS information, MT, address and new ID, multiple connection identifiers |
| M_SETUP | Establish multiple connections | MT address, new BS address, multiple connection identifiers and parameters |
| M_CALL_PROC | Indicate the reception of M_SETUP | MT address, multiple connection identifiers |
| M_CONNECT | Acknowledges M_SETUP | MT address, new ID, multiple connection identifiers and parameters |
| RT_CHANGE | Request change of routing table at HOS | Multiple connection identifiers, MT address |
| RT_CHANGE_ACK | Acknowledges RT_CHANGE | MT address |
| M_RELEASE | Request releasing multiple single hop connections | Multiple connection identifiers |
| M_RELEASE_ACK | Acknowledges M_RELEASE | Multiple connection identifiers |
| RENEGOTIATION | Renegotiation service/QOS parameter | Connection identifier, old service/QOS parameters, new service/QOS parameters |
| CONNECT* | Establish connection with requested/fallback service/QOS parameters | Connection identifiers, requested service/QOS parameters, offered service/QOS parameters |

| | | |
|---|---|---|
| *Modified signaling message | | |

The issue of backward compatibility arises when communication links between HOS and the base station transit through other regular ATM network switches. In the example described in conjunction with Fig. 3, the HO_REQUEST message transits through SW3 68. If SW3 68 is a regular ATM network switch that does not support mobility extensions, it is difficult for the HO_REQUEST to function transparently across SW3. If SW3 has mobility support extensions, it can interpret the message and issue a similar HO_REQUEST to HOS 62 with different connection identifier and call reference values. It is assumed that HOS 62 communicates directly with BS1 58, and all network switches support mobility.

Another signaling function of importance in the mobile arrangement is that of service parameter and QOS specification and renegotiation in the presence of heterogeneous/variable radio channel bandwidth. When an ATM connection is established to a mobile terminal, the available service parameters may be lower than that requested in the original connection request message. Most often this is due to radio channel limitations. In such a case, a suitable "fallback" mechanism which sets up a connection with the highest available bandwidth parameters is needed. This type of fallback function is useful in conventional fixed network scenarios as well, although it is not specified in the current ATM Forum UNI specification. For mobile terminals which operate in highly variable environments, the provision of a CONNECT (..., new service parameters, ...) message in response to a SETUP (..., service parameters, ...) message is possible.

In addition to service parameter fallback at call setup, mobile terminals encounter variable service availability due to handoff migrations. For example, a mobile operating CBR connection at 2Mbps might find that only 1.5 Mbps is available in the new microcell after handoff. In this case, a suitable RENEGOTIATE (..., service parameters, ...) syntax is required to provide for in-call adjustment of service parameters. This type of capability is useful in fixed networks as well as a robust mechanism for dealing with congestion, outage, etc. For a wireless ATM arrangement, this renegotiation capability is viewed as extremely important since frequent handoff events will otherwise result in relatively high call disconnection rates. Of course, not all application will be able to operate over a range of bit-rates, but it is anticipated that redesigned mobile software applications will incorporate such capabilities.

QOS specification is another important aspect to be considered in mobile ATM. Current ATM signaling provides for QOS specification in the standard SETUP message, but does not specify how this QOS budget is to be allocated between each segment of the route. In the wireless scenario, a larger QOS degradation budget (i.e. CDV, CLR or CTD) needs to be allocated to the wireless link in view of intrinsic radio channel characteristics, and performance implications of MAC and DLC protocols used on the access link. For example, if a total delay budget of 30 ms is specified, it might be appropriate to allocate 20 ms to the radio link and 10 ms to the fixed network segment, thus permitting the use of relatively powerful DLC modes for low CLR. Thus, it may be useful to augment current ATM syntax to specify a partition of QOS between wired and wireless network segments. Once again, this type of capability is needed in fixed ATM as well, particularly when dealing with heterogeneous link speeds and switch buffer sizes. One mechanism is to extend current SETUP syntax to include both total and next hop QOS values. Note that as discussed above for service parameters, renegotiation of QOS during handoff is also an important feature for the mobile ATM scenario.

A more detailed description of a preferred path rerouting method will now be described. The method (referring to Fig. 3) is based on the idea that when a mobile end host MT moves from base stations BS1 58 to BS2 60, then an existing connection between MT 50 and a remote terminal RT 54, 56 isrerouted at an intermediate switch 62, called the handoff or handover switch (HOS). The connection isrerouted at the HOS 62 by adding a subpath from HOS to BS2 60 and deleting the subpath from HOS to BS1 58, followed by a transfer of buffered cells from BS1 to BS2.

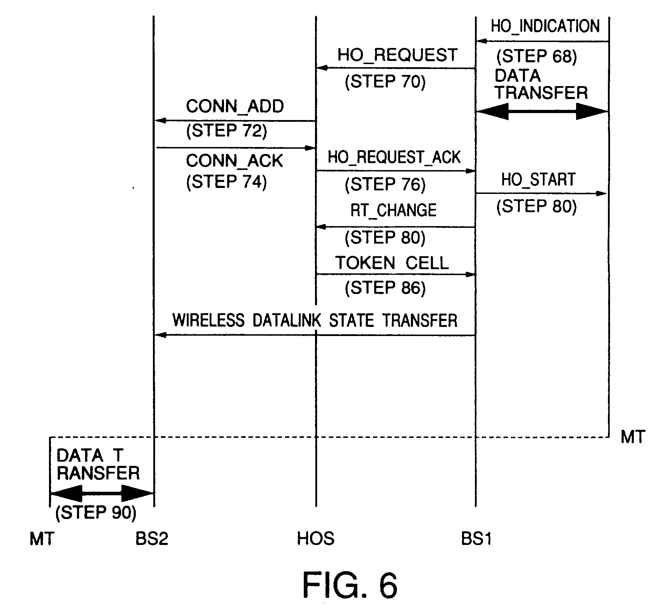

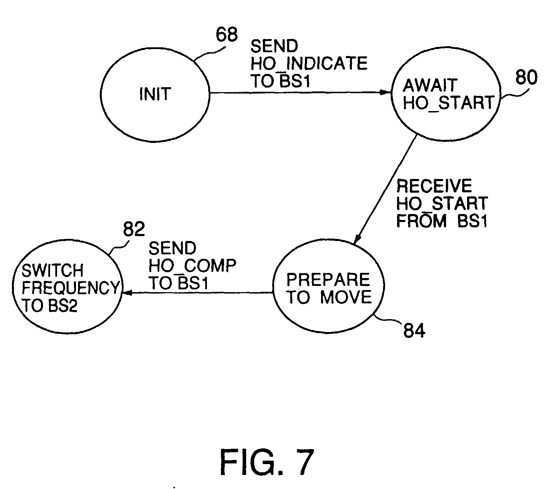

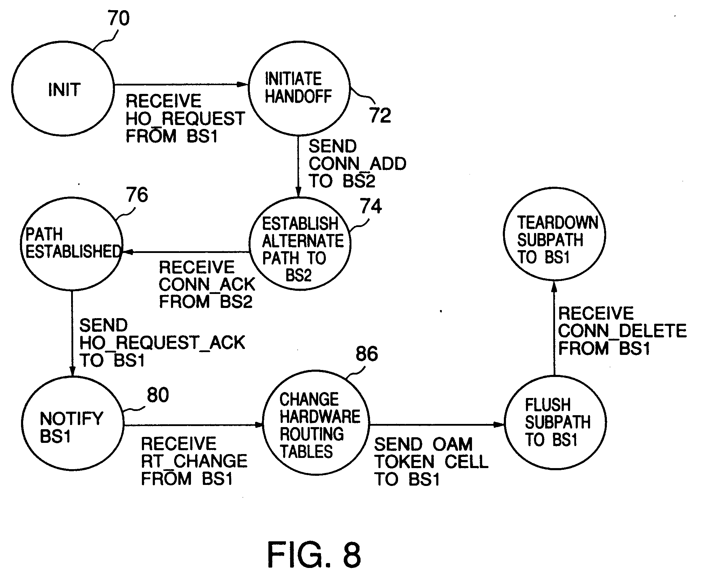

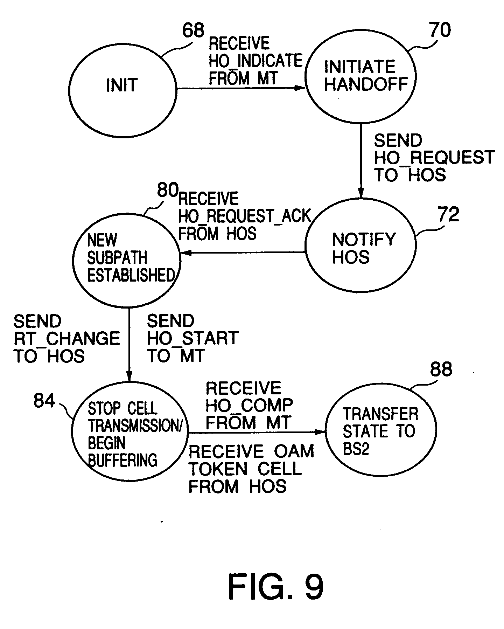

Referring now to Figs. 6 to 10 where Fig. 6 shows the signaling messages during handoff. Figs. 7, 8, 9 and 10 are state transition diagrams for the mobile terminal to be handed off, the handoff switch, an initial base station (BS1) and a subsequent base station (BS2), respectively. The same numerals are used for the same sequential step in each figure.

BS1 sends a HO_REQUEST (conn-id) message to HOS (step 70) to initiate rerouting of the connection identified by conn-id, using appropriate extensions to the NNI signaling standards.

The HOS sends a connection setup signaling message CONN_ADD (conn_id) to BS2 (step 72), creating the subpath from HOS to BS2 for the connection conn_id.

BS2 responds with a CONN_ACK (conn_id) signaling message to HOS (step 74), if the subpath was setup successfully. BS2 also reserves buffer space to hold incoming cells on the subpath. The buffer space is released after the handoff is complete.

HOS sends a HO_REQUEST_ACK (conn_id) signaling message to BS1 (step 76).

MT sends a HO_INDICATE signaling message to BS1(step 68).

Upon receiving the HO_REQUEST_ACK message, BS 1 sends a HO_START (conn_id) signaling message to MT (step 80), stops transmitting data cells, and sends a RT_CHANGE signal to HOS (step 80).

MT switches its operating frequency to that of BS2 after receiving HO_START from BS1 (step 82). It can optionally send a HO_COMPLETE message to BS1 before switching frequencies (step 84).

After receiving the RT_CHANGE message, HOS changes its hardware routing tables so that the cells on connection are routed to BS2 via the newly established subpath (step 86) and sends a OAM ("token") cell on the existing subpath towards BS1 (step 86).

BS2 "splices" the received datalink state with its buffered state, and transmits cells to MT1 in sequence (step 90).

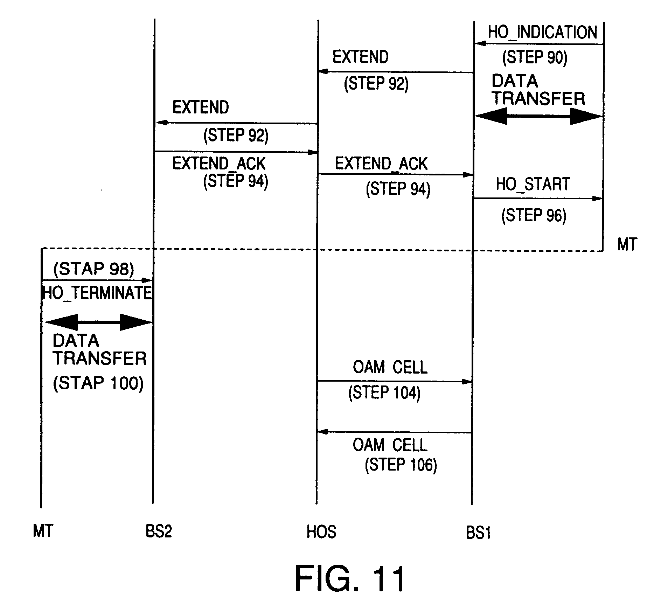

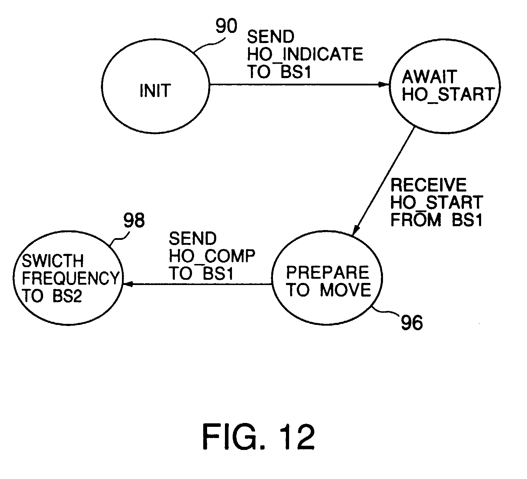

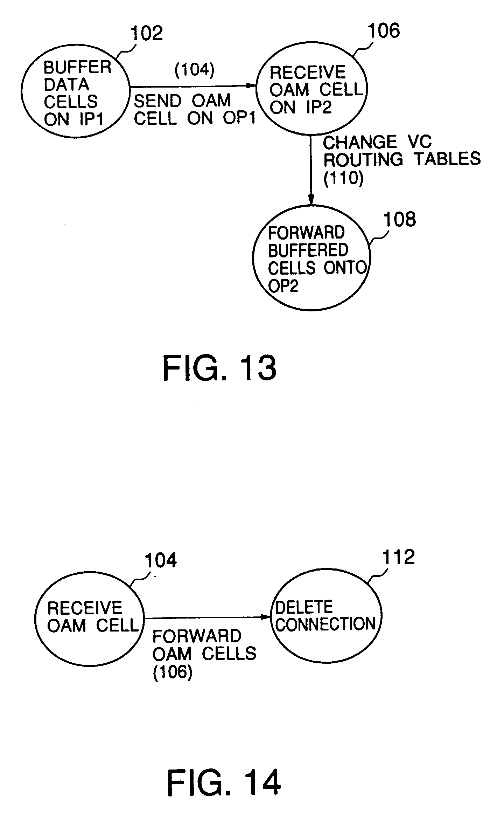

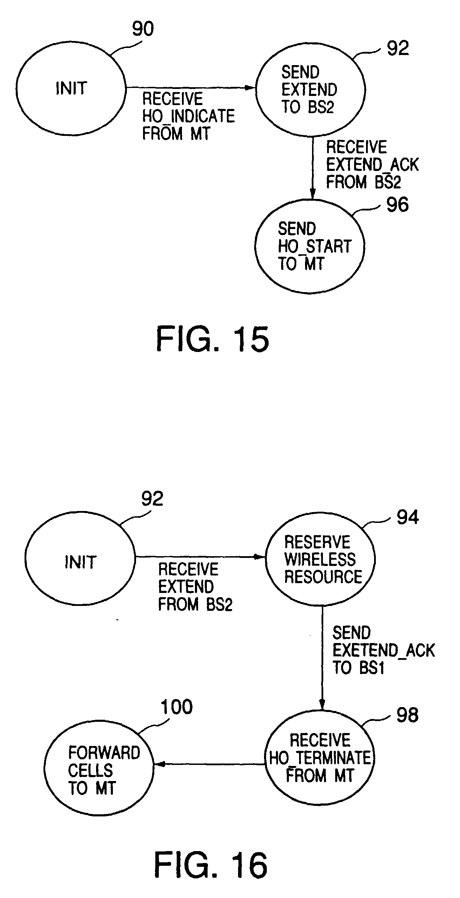

An alternative preferred path rerouting method involves path extension with lazy optimization. Referring now to Figs. 11 to 16, where Fig, 11 shows the signaling message during handoff. Lazy optimization refers to the fact that the path can be optimized by eliminating duplicate or unnecessary path by removing loops after handoff. Figs. 12, 13, 14, 15 and 16 are state transition diagrams for the mobile terminal to be handed off, the loop removal at looping point (Hand Off Switch), the loop removal at the initial base station (BS1), the initial base station (BS1) itself, and the subsequent base station (BS2), respectively. The same numerals are used for the same sequential step in each figure.

The path extension with lazy optimization handoff scheme is based on two principal concepts. First, extending an existing connection (to the mobile MT) from the previous base station (BS1) to the current base station (BS2) after a cell switch and second, removal of loops in the augmented connection performed using in-band OAM cells in a lazy manner after the MT has started to send and receive cells from BS2.

The signal and steps involved in the handoff process are as follows:

MT sends a HO_INDICATION signaling message (step 90) to BS1 indicating BS2 to be its next base station.

BS1 sends an EXTEND (conn_id) signaling message to BS2 (step 92), thereby extending the current connection with BS1.

BS2 replies with an EXTEND_ACK (conn_id) if the connection would be successfully extended (step 94). At this point BS2 allocates buffer space to hold incoming cells on the extended connection, until MT switches its operating frequency to that of BS2.

BS1 then stops transmitting cells on its wireless link to MT (step 96), asking it to switch its operating frequency to that of BS2.

MT switches its frequency and sends a HO_TERMINATE signaling message to BS2 (step 98).

BS2 starts to forward cells from the extended connection on the wireless link to MT (step 100).

A second sequence of steps is executed after the handoff is completed to remove potential loops in the augmented connection. A switch detects that there is a looping point in the augmented connection by examining entries in the connection routing tables. If there are two entries for the same connection, then the switch is a looping point. The switch HOS is a looping point since its connection table contains two distinct entries for the same connection conn_id: 〈IP1, OP1〉, 〈IP2, OP2〉.

The first entry has its input port (IP1) as the link between RT and HOS and the output port (OP1) as the link from the HOS to BS1. The second entry has the link between BS1 and HOS as its input port (IP2), and the link between HOS and BS2 as its output port (OP2). See, for example, Fig. 3.

In the example, OP1 and IP2 are the same link, but in general that need not be the case. The looping point is detected during the process of path extension, i.e. when a switch receives and processes the EXTEND message.

The loop elimination procedure is initiated by the looping point after the MT has begun to receive ATM cells from the new base station. This can be inferred by the looping point (the hand-off switch, HOS) by observing when ATM cells begin to flow across both pairs of input-output ports, corresponding to the connection conn_id. At this time, the looping point (HOS) begins to buffer cells on the input port (IP1) corresponding to the beginning of the loop (step 102); sends at OAM cell on the output port (OP1), corresponding to IP1 (step 104); receives the OAM cell back on IP2 (step 106); forwards the buffered ATM cells onto OP2 (step 108); change its hardware routing tables (VPI/VCI entries) to route incoming ATM cells on IP1 onto OP2 (step 110); and merges the two connection table (software) entries into a single entry 〈IP1, OP2〉.

When each intermediate switch in the loop receives the OAM cell (sent by the looping point) it forwards the OAM cell on the corresponding output port. Then, it deletes that connection (step 112) and releases all resources used for the connection.

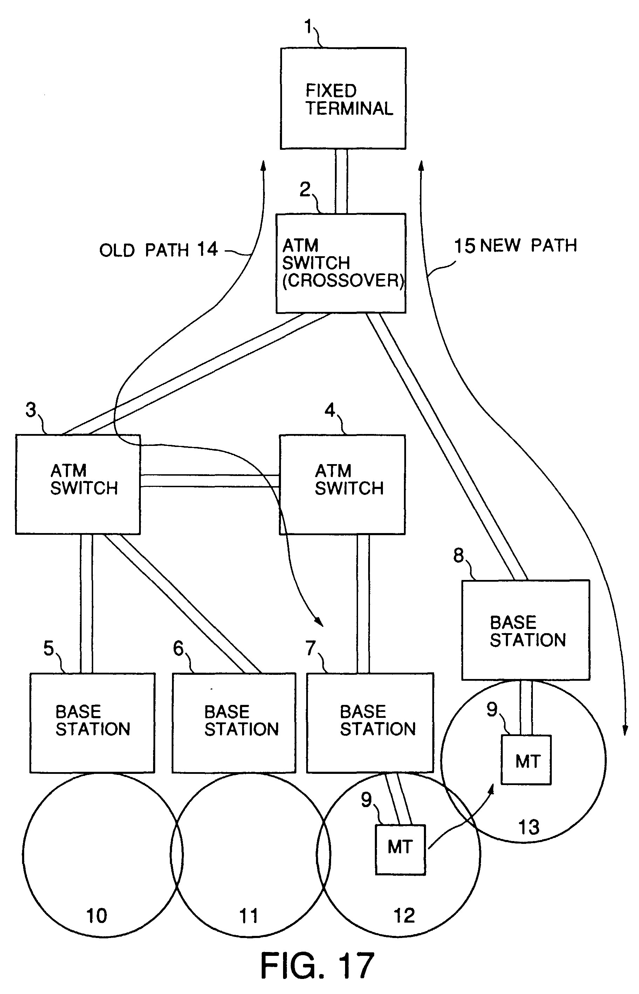

Fig. 17 is a diagram of a typical mobile ATM network architecture. It consists of fixed terminal 1, ATM switches 2, 3 ad 4, radio port base stations 5, 6, 7 and 8, with corresponding coverage areas 10, 11, 12 and 13, and mobile terminal (MT) 9.

MT 9 is a complete ATM end system that is capable of supporting multimedia applications, such as an NEC Versa laptop with a wireless ATM card. An example of a wireless ATM card is described in an article by Cesar Johnston entitled, "A Network Interface Card for Wireless ATM Networks", Proceedings of IEEE PIMRC, 1996. This article is incorporated herein by reference. MT 9 uses a standard ATM signaling protocol (Q.2931, ATM Forum UNI3.1) for connecting between end systems.

A typical base station is an ATM switch with a radio port for transmitting cells on the wireless link.

ATM switches 2, 3 and 4, such as 2.4 Gbps NEC model 55 running ATM Forum's UNI and NNI signaling, plus mobility extensions, are interconnected as shown via wireline links, with the exception of MT 9, which is interconnected to the network via a wireless link with the base stations.

The connection between the ATM switches, base stations and fixed terminal are standard ATM wireline links, such as TAXI or SONET. The connection between MT 9 and base stations 7 and 8 are standard radio/wireless ATM links.

For purpose of describing the preferred embodiment, it is assumed that a virtual channel has been established between fixed terminal 1 and MT 9 via ATM switches 2, 3, and 4 and base station 7, via conventional means.

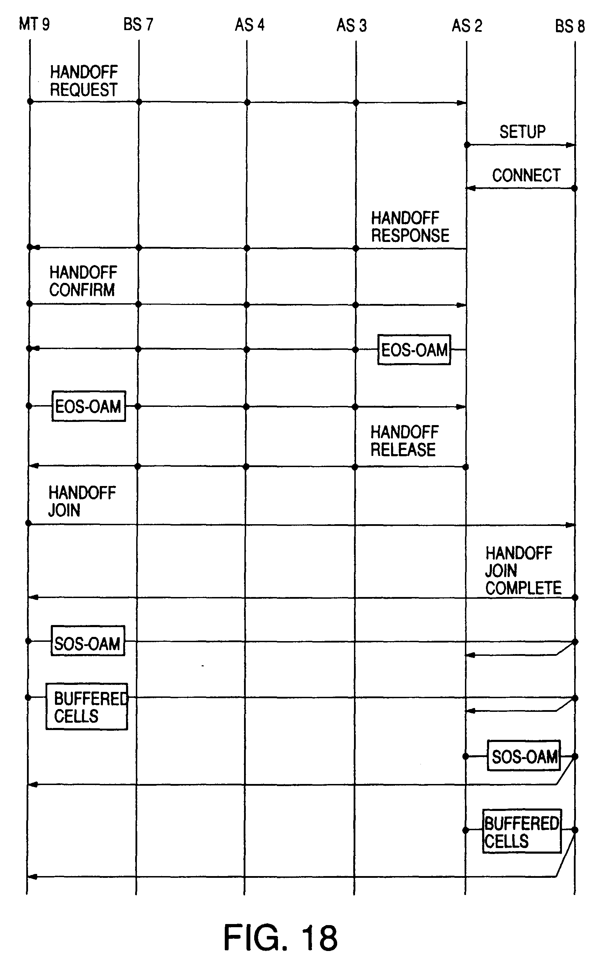

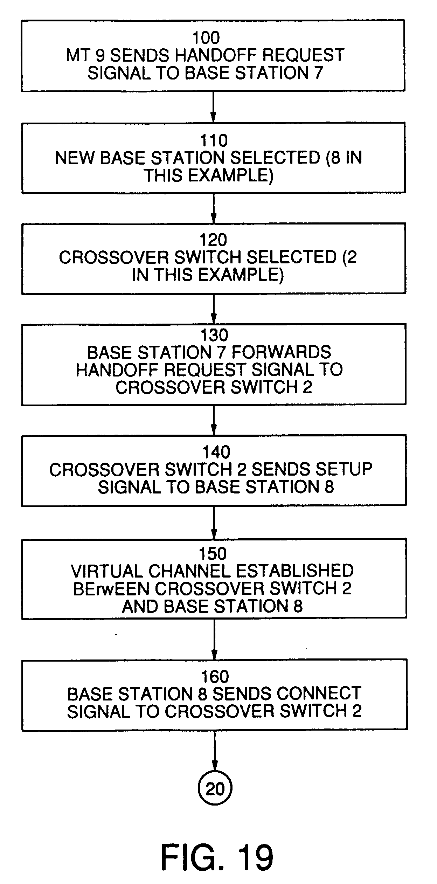

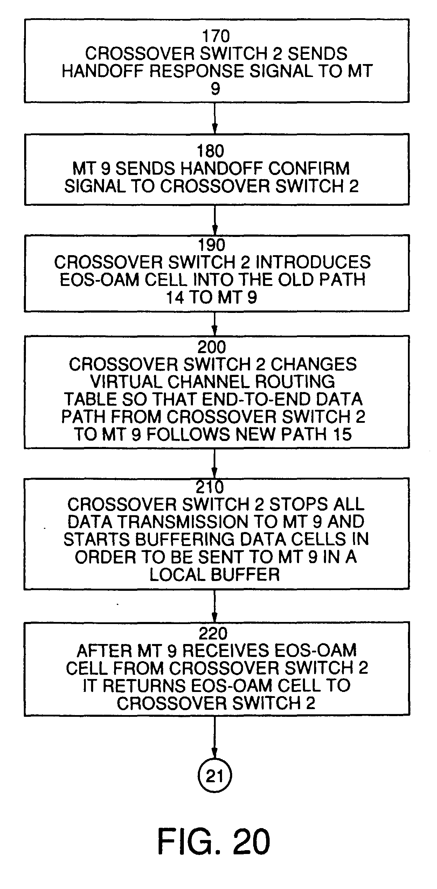

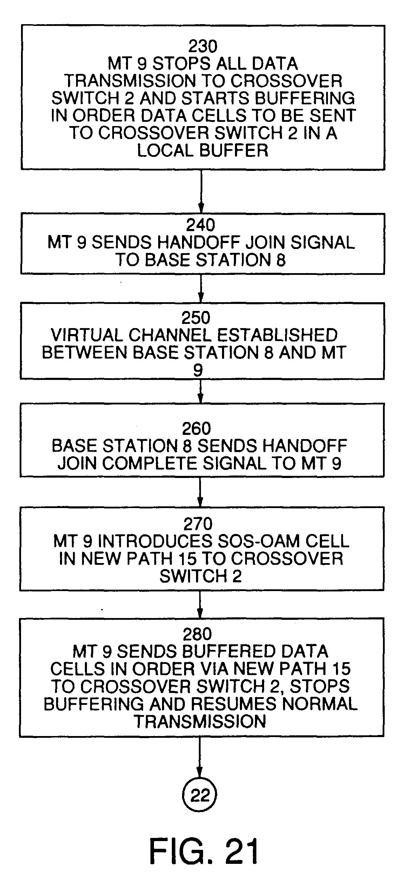

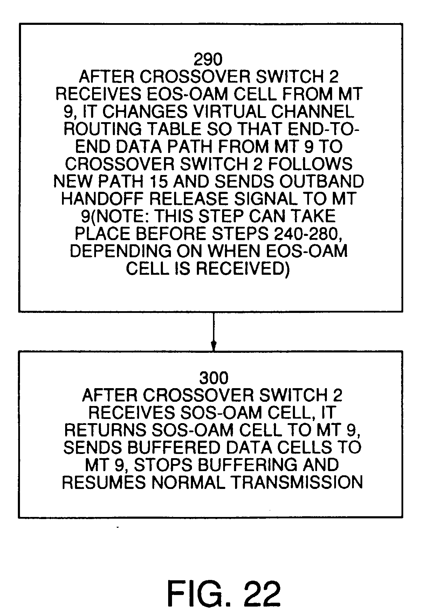

Next, the sequence of the handoff process will be described with reference to Figs. 18 and 19 through 22. When MT 9 or base station 7 determined that a handoff is necessary, for example, when MT 9 starts to move outside coverage area 12 of base station 7 and into coverage area 13 of base station 8, MT 9 sends a proposed extended signaling message HANDOFF REQUEST signal to base station 7, requesting a connection handoff to another base station (step 100). Methods for choosing a new base station are well known in cellular telephone systems. For example, it is assumed that base station 8 will be chosen as the new base station (step 110).

Next, an ATM switch that will act as a crossover switch, namely, a handoff switch is selected (step 120). The method for selecting the ATM switch to act as crossover switch is also not essential to this invention, however, a method for selecting a crossover switch is described in an article by C. K. Toh entitled, "Performance Evaluation of Crossover Switch Discovery for Wireless ATM LANs", Proceedings of Infocom, 1996. This article is incorporated herein by reference. For this example, it is assumed that ATM switch 2 will be chosen to act as the crossover switch. Base station 7 then forwards the HANDOFF REQUEST signal to crossover switch 2 (step 130).

After receiving the HANDOFF REQUEST signal, crossover switch 2 sends an outband SETUP signal to base station 8 (step 140). When a virtual channel is established between crossover switch 2 and base station 8, base station 8 sends an outband CONNECT signal to crossover switch 2 (steps 150, 160). Note that outband signals are sent on a separate signaling channel, while inband signals are typically operation and maintenance (OAM) cells sent along the connection path.

After receiving CONNECT signal, crossover switch 2 sends an outband HANDOFF RESPONSE signal to MT 9 (step 179). MT 9 confirms the receipt of this signal by sending an outband HANDOFF CONFIRM signal to crossover switch 2 via base station 7 and switches 4 and 3 (step 180).

To achieve a zero cell-loss handoff, two requirements must be met: (1) cells in transit on the old path 14 (from crossover switch 2 to MT 9, via ATM switches 3 and 4 and base station 7) shall not be lost; and (2) cells to be sent on the new path 15 (from MT 9 to crossover switch 2 via base station 8) shall not be forwarded by MT 9 until MT 9 establishes link-layer connectivity to the new base station 8.

After crossover switch 2 receives the HANDOFF CONFIRM signal, it introduces an inband end-of-stream (EOS) operations and maintenance (OAM) cell into the old path 14 to MT 9 (step 190). This EOS-OAM in effect "flushes" all of the data cells that are in transit from crossover switch 2 to MT 9 on the old path 14, thus preventing the loss of data cells. Crossover switch 2 the changes its virtual channel routing table so that the end-to-end datapath from crossover switch 2 to MT 9 now follows the new path 15 (step 200). Crossover switch 2 also immediately stops all data cell transmission to MT 9 and starts buffering, in order, the data cells to be sent to MT 9 in a local buffer (step 210). This, in effect, release the old path 14 in this direction for subsequent data cells, however, the old path 14 is still in place in the opposite direction from MT 9 to crossover switch 2 to accommodate incoming data cells from MT 9.

After MT 9 receives the EOS-OAM cell from crossover switch 2, it returns it to crossover switch 2 (step 220). MT 9 then immediately stops all transmission of data cells to crossover switch 2 and starts buffering, in order, the data cells to be sent to crossover switch 2 in a local buffer (step 230). The return trip of the EOS-OAM cell in effect "flushes" all of the data cells that are in transit from MT 9 to crossover switch 2 on the old path 14, thus preventing the loss of data cells.

After MT 9 returns the EOS-OAM cell to crossover switch 2, it sends an outband HANDOFF JOIN signal to base station 8 to establish a wireless connection and complete the new path 15 (step 240). After the connection is established, base station 8 sends an outband HANDOFF JOIN COMPLETE signal to MT 9 (steps 250, 260). MT 9 then sends an inband start-of-stream (SOS) OAM cell to crossover switch 2 over the new path 15 (step 270). MT 9 then sends the data cells it had been buffering, in a first in, first out order, stops buffering data cells and resumes normal transmission of data cells (step 280).

After crossover switch 2 receives the EOS-OAM from MT 9, it changes its virtual channel routing table so that the end-to-end datapath from MT 9 to crossover switch 2 now follow the new path 15 and sends and outband HANDOFF RELEASE signal to MT 9 which releases the old path 14 in this direction (step 290). Note that this step can take place before any of steps 240-280, depending on when crossover switch 2 receives the EOS-OAM cell.

After crossover switch 2 receives the SOS-OAM cell from MT 9, it returns the SOS-OAM cell followed by the data cells it had been buffering, in a first in, first out order, and stops buffering and resumes normal transmission of data cells (step 300). Note that transmission of the data cells crossover switch 2 receives from MT 9 after the SOS-OAM cell can not take place until after crossover switch 2 receives the EOS-OAM cell referred to in step 280. If this EOS-OAM cell has not yet been received, crossover switch 2 buffers, in order, the data cells it receives from MT 9 over the new path until the EOS-OAM is received, at which time the buffered cells can be released in a first in, first out order.

As an alternative embodiment, the buffering of data cells can be performed at the new base station 8 instead of at crossover switch 2.

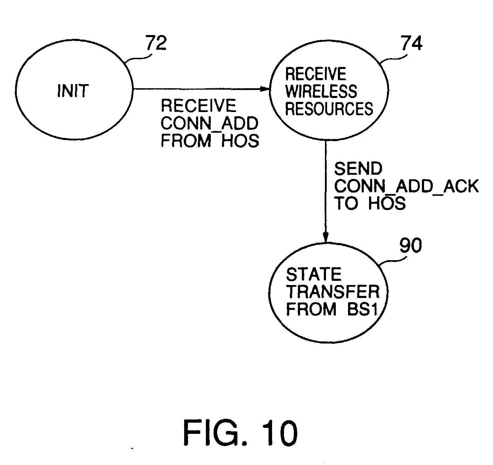

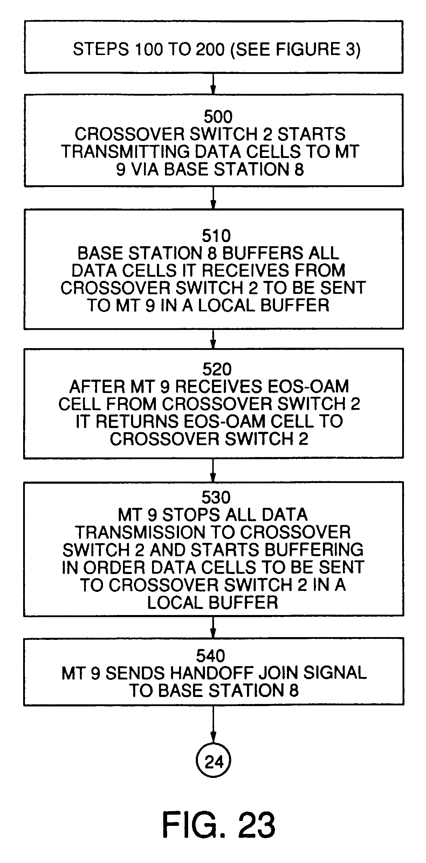

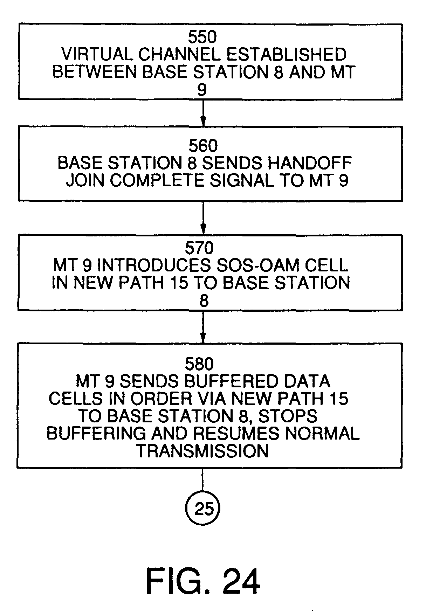

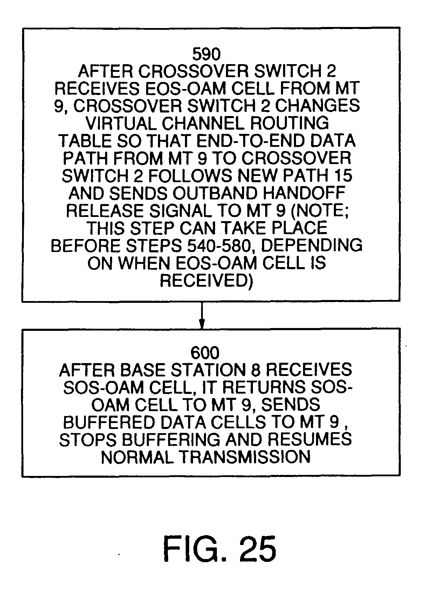

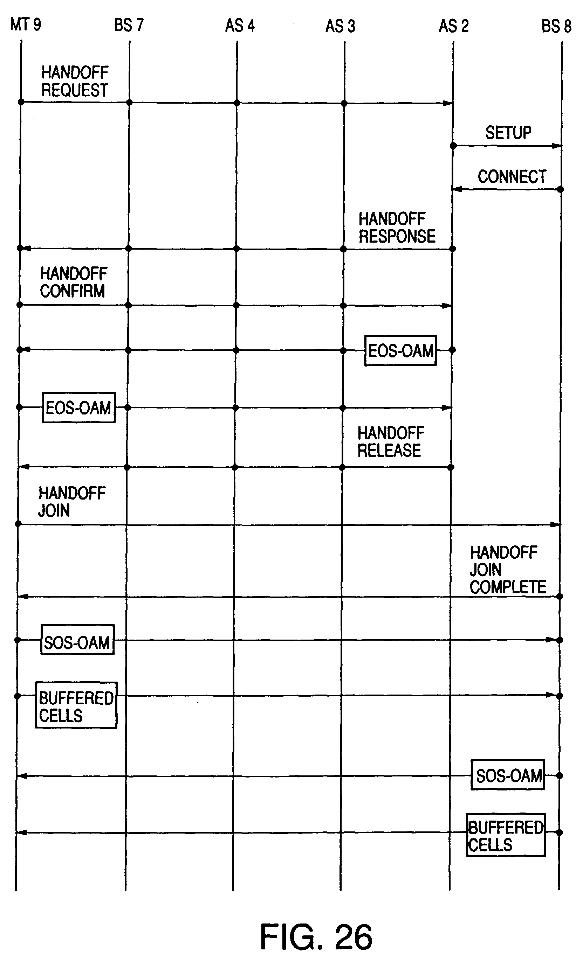

Referring to Figs. 23 to 25 and 26, description will be made about the alternative embodiment. In this embodiment, steps 100-200 of the handoff process remain the same (refer to Figs. 10 to 22). The remaining steps differ from the process described above as follows.

After crossover switch 2 receives the EOS-OAM cell and changes its virtual channel routing table so that the end-to-end datapath from crossover switch 2 to MT 9 now follows the new path 15 (step 200), crossover switch 2 starts transmitting data cells to MT 9 via base station 8 (step 500). Base station 8 then starts buffering, in order, data cells to be sent to MT 9 in a local buffer (step 510).

After MT 9 receives the EOS-OAM cell from crossover switch 2, it returns the EOS-OAM cell to base station 8 via crossover switch 2 (step 520). MT 9 then immediately stops all transmission of data cells to crossover switch 2 and starts buffering, in order, data cells to be sent to crossover switch 2 in a local buffer (step 530). The return trip of the EOS-OAM cell in effect "flushes" all of the data cells that are in transit from MT 9 to crossover switch 2 on the old path 14, thus preventing the loss of data cells.

After MT 9 returns the EOS-OAM cell to base station 8, it sends an outband HANDOFF JOIN signal to base station 8 to establish a wireless connection and complete the new path 15 (step 540). After the connection is established, base station 8 sends outband HANDOFF JOIN COMPLETE signal to MT 9 (steps 550, 560). MT 9 then introduces an inband start-of-stream (SOS) OAM cell to base station 8 over the new path 15 (step 570). MT 9 then sends the data cells it had been buffering, in a first in, first out order, steps buffering data cells and resumes normal transmission of data cells (step 580).

After crossover switch 2 receives the EOS-OAM from MT 9, it changes its virtual channel routing table so that the end-to-end datapath from MT 9 to crossover switch 2 now follows the new path 15 and sends an outband HANDOFF RELEASE signal to MT 9 which releases the old path 14 in this direction (step 590). Note that this step can take place before any of steps 540-580, depending on when crossover switch 2 receives the EOS-OAM cell.

After base station 8 receives the SOS-OAM cell from MT 9, it returns it, followed by the data cells it had been buffering, in a first in, first out order, and stops buffering and resumes normal transmission of data cells (step 300). Note that trasmission of the data cells base station 8 receives from MT 9 after the SOS-OAM cell can not take place until after crossover switch 2 receives the EOS-OAM cell referred to in step 590. If this EOS-OAM cell has not yet been received, base station 8 buffers the data cells it receives from MT 9 over the new path until the EOS-OAM is received, at which time the buffered cells can be released in a first in, first out order.

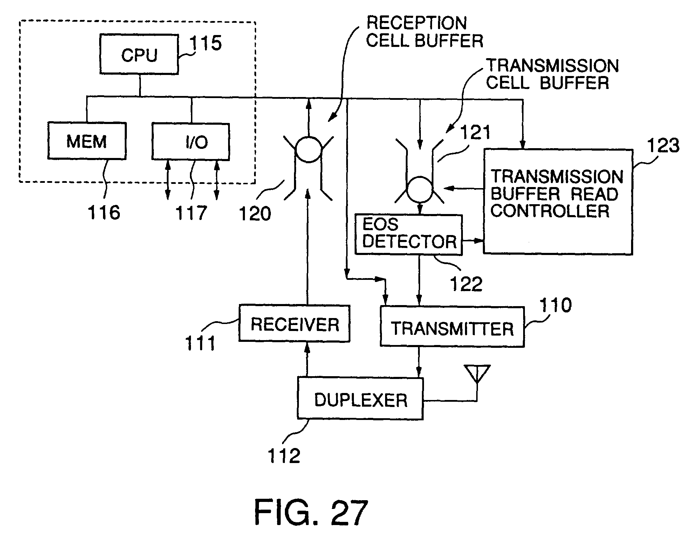

Referring to Fig. 27, illustration is schematically made about a mobile terminal which is for use in a wireless ATM communication system according to this invention. The mobile terminal illustrated is a mobile terminal for transmission and reception of ATM cells and includes a transmitter 110 and a receiver 111 both of which are coupled to an antenna through a duplexer 112. Like in a usual ATM mobile terminal, the illustrated mobile terminal has a terminal controller which is composed of a central processing unit (CPU) 115, a memory (MEM) 116, and an input/output (I/O) interface 117. In the terminal controller, the memory 116 and the I/O interface 117 are connected to the CPU 115 through a bus.

In Fig. 27, the receiver 111 is connected to a reception ATM cell buffer 120 which is in turn connected to the CPU 115 through the bus. In addition, a transmission ATM cell buffer 121 and an EOS detector 122 are connected between the CPU 115 and the transmitter 110. The EOS detector 122 serves to detect an EOS-OAM. The illustrated transmission ATM cell buffer 121 and the EOS detector 122 are connected to a transmission buffer read controller 123.

Next, description will be made about a handoff operation of the mobile terminal illustrated in Fig. 27.

When a known detector (not shown) detects that the handoff operation is to be carried out, the CPU 115 included in the terminal controller sends a hand-off control OAM cell (namely, an EOS-OAM cell representative of the last cell of a cell stream) to the transmission cell buffer 121. The EOS-OAM cell is transmitted to a base station (not shown in this figure) through the EOS detector 122 and the transmitter 110. In this event, the EOS-OAM is detected by the EOS detector 122 which notifies the transmission buffer read controller 123 of detection of the EOS-OAM. Responsive to this notification, the transmission buffer read controller 123 stops a readout operation of the transmission buffer 122. Thereafter, an SOS-OAM which is given from the CPU 115 is arranged as a leading cell or the first cell at an ATM cell stream which is to be sent from the mobile terminal to the base station and which is successively stored in the transmission cell buffer 121.

While the ATM cell stream is being stored in the transmission cell buffer 121, control information is not sent to the transmission cell buffer 121 and is directly given to the transmitter 110.

On the other hand, when the SOS-OAM is transmitted from the base station to indicate a leading cell of a cell stream, the SOS-OAM is sent to the CPU 115 through the receiver 111 and the reception cell buffer 120. Responsive to the SOS-OAM, the CPU 115 judges that the cell stream may be restarted and indicates a start of transmission to the transmission buffer read controller 123. Supplied with this indication, the transmission buffer read controller 123 makes the transmission cell buffer 121 transmit, through the transmitter 110, the SOS-OAM and thereafter the following ATM cell stream stored in the transmission cell buffer 121.

In Fig. 27, description has thus far been made only about the mobile terminal. However, the crossover switch may be formed in a manner similar to that illustrated in Fig. 27.

While the above is a description of the invention in its preferred and alternate embodiment, various modifications and equivalents may be employed, only some of which have been described above. Therefore, the above description and illustration should not be taken as limiting the scope of the invention which is defined by the claims.

## Claims

1. A method for mobile-comunications connections and routing in an ATM network including base stations, a mobile terminal, a remote terminal, switches, a hand-off switch and datapath links, comprising the steps of:
establishing a communication connection from a remote terminal to a mobile terminal via a first datapath link, including said hand-off switch, a first switch, and a first base station;
signaling from said mobile terminal to said first base station when a hand-off is to occur;
signaling from said first base station to a second base station via a second datapath link and a second switch requesting a hand-off;
signaling from said second base station to said first base station that a second datapath link from said hand-off switch to said second base station via said second switch is available;
signaling from said hand-off switch to said first switch and said second switch to change datapath links from said first datapath link to said second datapath link; and
signaling from said first base station to said mobile terminal to change communications from said first base station to said second base station.

2. A method for mobile communications connections and routing in an ATM network including base stations, a mobile terminal, a remote terminal, switches, and datapath links, comprising the steps of:
establishing a communications connection from a remote terminal to a mobile terminal via a first datapath link including a first switch and a first base station;
signaling from said mobile terminal to said first base station when a hand-off is to occur;
signaling from said first base station to a second base station via a second datapath link including a second switch requesting a hand-off while establishing a second datapath link from said first base station to said second base station via said first switch and said second switch;
signaling from said second base station to said first base station that said second datapath link is established; and
signaling from said first base station to said mobile terminal to change communications from said first base station to said second base station and sending data from said first base station to said second base station via said second datapath link.

3. A mobile-communication connections and routing network comprising:
a communication connection from a remote terminal to a mobile terminal via a first datapath link including a hand-off switch, and a first base station, said mobile terminal signaling to said first base station when a hand-off is to occur;
a second base station receiving a signal said first base station via a second datapath link including a second switch requesting a hand-off, said second base station signaling to said first base station when a second datapath link from said hand-off switch to said second base station via said second switch is available;
said hand-off switch signaling said first switch and said second switch to change datapath links from said first datapath link to said second datapath link; and
said first base station signaling to said mobile terminal to change communications from said first base station to said second base station.

4. A mobile-communication connections and routing network comprising:
communications connection from a remote terminal to a mobile terminal via a first datapath link including a first switch and a first base station, said mobile terminal signaling to said first base station when a hand-off is to occur;
a second base station receiving a signal from said first base station via a second datapath link including a second switch requesting a hand-off while establishing said second datapath link from said first base station to said second base station via said first switch and said second switch;
said second base station signaling to said first base station that said second datapath link is established; and
said first base station signaling to said mobile terminal to change communications from said first base station to said second base station and said first base station sending data to said second base station via said second datapath link.

5. A wireless ATM communication method for use in a system which comprises a mobile terminal and a hardware network communicable with the mobile terminal through an ATM cell, said method comprising the steps of:
inserting a specific OAM cell in a stream of user cells between the mobile terminal and the fixed ATM network when a hand-off is to caused to occur at the mobile terminal; and
carrying out a hand-off operation by the use of the specific OAM cell.

6. A wireless ATM communication method claimed in claim 5, said system comprising a base station which has a first data path link between the base station and the mobile terminal and another base station which is to form a second data path link between another base station and the mobile terminal, said hand-off operation being carried out by switching the first data path link to the second data path link, the OAM cell inserting step being carried out at the mobile terminal and comprising the steps of:
producing a first OAM cell which is representative of an end cell transmitted before the hand-off operation;
inserting, as the specific OAM cell, the first OAM cell in the user cell stream;
producing a second OAM cell which is representative of a start cell transmitted after the hand-off operation; and
inserting, as the specific OAM cell, the second OAM cell in the user cell stream.

7. A wireless ATM communication method as claimed in claim 6, the fixed ATM network comprising a first base station which forms a first data path link to the mobile terminal, a second base station which is to form a second data path link to the mobile terminal, and a crossover switch which is connected to both the first and the second base stations and which is connected to a remote terminal, the hand-off operation being carried out by the crossover switch and comprising the steps of:
receiving the first OAM cell sent from the mobile terminal through the first data path link;
returning the first OAM cell back to the mobile terminal through the first data path link; and
transmitting the second OAM cell through the second data path link before the user cell stream is sent from the remote terminal to the mobile terminal.

8. A wireless ATM communication method as claimed in claim 7, wherein the fixed ATM network comprises:
storage means which is located within the second data path link to store the second OAM cell sent from the crossover switch and a user cell stream following the second OAM cell.

9. A wireless ATM communication method as claimed in claim 8, further comprising the steps of:
transmitting, from the mobile terminal, the second OAM cell stored in the mobile terminal and a user cell stream which is stored in the mobile terminal and which follows the second OAM cell when the first OAM cell is received through the first data path link from the crossover switch.

10. A mobile terminal communicable with an ATM network by the use of a wireless ATM technique, the mobile terminal comprising:
transmitting means, which is operable on a hand-off operation, for transmitting a first OAM cell which is representative of an end cell of a user cell stream transmitted from the mobile terminal through a first data path link formed at present;
storing means for storing a stream of user cells to be transmitted from the mobile terminal after the first OAM cell is transmitted;
transmitting means for transmitting a second OAM cell which is representative of a start of the user cell stream and which is transmitted prior to transmission of the user cell stream through a second data path link to be handed off; and
storing means for storing the user cell stream of the mobile terminal following the transmission of the second OAM cell.

11. A crossover switch for use in a wireless ATM network, comprising:
first transmitting means operable in response to a first OAM cell, which is representative of an end of a user cell stream and which is received through a first data path link formed between the crossover switch and a mobile terminal at present, for transmitting through the first data path link, a first OAM cell which is representative of an end of a user cell stream given from a remote terminal to the crossover switch;
storing means for storing the user cell stream sent from the remote terminal after the first OAM cell is transmitted from the crossover switch;
second transmitting means for transmitting a second OAM cell representative of a start of the user cell stream through a second data path link to be handed off prior to transmission of the user cell stream stored in the storing means; and
means for successively transmitting the user cell stream after the transmission of the second OAM cell.

12. A wireless ATM communication system comprising a mobile terminal and a fixed ATM network communicable with the mobile terminal by the use of an ATM cell, said communication system carrying out a specific operation between the mobile terminal and the hardware network by transferring a predetermined OAM cell between the mobile terminal and the fixed ATM network.

13. A wireless ATM communication system as claimed in claim 12, wherein said specific operation is a hand-off operation for switching a base station forming a data path link to the mobile station from one to another.

14. A method for mobile communication routing in a network including base stations, a mobile terminal, a fixed host, an ATM switch with an established communication connection from a fixed host to said mobile terminal comprising the step of:
(a) signaling from a mobile terminal to a first base station over an established communication connection when a hand-off is to occur;
(b) selecting a second base station;
(c) selecting an ATM switch to act as a crossover switch;
(d) signaling from said first base station to said crossover switch over said established communication connection when said hand-off is to occur;
(e) establishing a portion of a new communication connection from said crossover switch to said second base station;
(f) stopping transmission of data from said crossover switch to said mobile terminal over said established communication connection and starting to buffer data in a data buffer in said crossover switch;
(g) stopping transmission of data from said mobile terminal to said crossover switch over said established communication connection and starting to buffer data in a data buffer in said mobile terminal;
(h) releasing said established communication connection;
(i) establishing a remaining portion of said new communication connection from said mobile terminal to said second base station;
(j) starting transmission of data from said mobile terminal to said crossover switch via said new base station and said second communication connection; and
(k) starting transmission of data from said crossover switch to said mobile terminal through said second base station and over said new communication connection.

15. A method for mobile communication connections and routing in a network according to claim 14 wherein said step (e) comprises the steps of:
(e1) said crossover switch sending a setup signal to said new base station; and
(e2) said new base station sending a connect signal to said crossover switch confirming establishment of said portion of said new communication connection.

16. A method for mobile communication connections and routing in a network according to claim 15 wherein step (i) comprises the steps of:
(i1) said mobile terminal sending a handoff join signal to said new base station; and
(i2) said new base station sending a handoff join complete signal to said mobile terminal confirming establishment of said remaining portion of said new communication connection.

17. A method for mobile communication connections and routing in a network according to claim 16 wherein said step (f) comprises the steps of:
(f1) said crossover switch sending an end-of-stream OAM cell to said mobile terminal via said established communication connection;
(f2) said crossover switch changing a first entry in a virtual channel routing table such that further data cell transmission from said crossover switch to said mobile terminal will be over said new communication connection;
(f3) said crossover switch stopping all data cell transmission to said mobile terminal and starting to buffer, in order, data in said crossover switch data buffer.

18. A method for mobile communication connections and routing in a network according to claim 17 wherein said step (g) comprises the steps of:
(g1) said mobile terminal returning said end-of-stream OAM cell to said crossover switch;
(g2) said mobile terminal stopping all data cell transmission to said crossover switch and starting to buffer, in order, data cell in said mobile terminal data buffer.

19. A method for mobile communication connections and routing in a network according to claim 18 wherein said step (j) comprises the steps of:
(j1) said mobile terminal sending a start of stream OAM cell to said crossover switch over said new communication connection;
(j2) said mobile terminal sending buffered data cell in first in first out, order to said crossover switch over said new communication connection;
(j3) said mobile terminal stopping buffering of data cell; and
(j4) said mobile terminal resuming normal data cell transmission.

20. A method for mobile communication connections and routing in a network according to claim 19 wherein said step (k) comprises the steps of:
(k1) after receiving said end of stream OAM cell, said crossover switch changing a second entry in said virtual channel routing table such that further data cell transmission from said mobile terminal to said crossover switch will be over said new communication connection;
(k2) said crossover switch returning said start of stream OAM cell to said mobile terminal;
(k3) said crossover switch sending buffered data cell in first in, first out, order to said mobile terminal over said new communication connection;
(k4) said crossover switch stopping buffering of data; and
(k5) said crossover switch resuming normal data transmission.

21. A method for mobile communication routing in a network including base stations, a mobile terminal, a fixed host, an ATM switch, with an established communication connection from a fixed host to said mobile terminal comprising the steps of:
(a) signaling from a mobile terminal to a first base station over an established communication connection when a hand-off is to occur;
(b) selecting a second base station;
(c) selecting an ATM switch to act as a crossover switch;
(d) signaling from said first base station to said crossover switch over said established communication connection when said hand-off is to occur;
(e) establishing a portion of a new communication connection from said crossover switch to said second base station;
(f) stopping transmission of data cell from said crossover switch to said mobile terminal over said established communication connection and starting to buffer data cell in a data buffer in said second base station;
(g) stopping transmission of data cell from said mobile terminal to said crossover switch over said established communication connection and starting to buffer data cell in a data buffer in said mobile terminal;
(h) releasing said established communication connection;
(i) establishing a remaining portion of said new communication connection from said mobile terminal to said second base station;
(j) starting transmission of data cell from said mobile terminal to said crossover switch via said second base station and said new communication; and
(k) starting transmission of data cell from said crossover switch to said mobile terminal through said second base station and over said new communication connection.

22. A method for mobile communication connections and routing in a network according to claim 21 wherein said step (e) comprises the steps of:
(e1) said crossover switch sending a setup signal to said new base station; and
(e2) said new base station sending a connect signal to said crossover switch confirming establishment of said portion of said new communication connection.

23. A method for mobile communication connections and routing in a network according to claim 22 wherein said step (i) comprises the steps of:
(i1) said mobile terminal sending a handoff join signal to said new base station; and
(i2) said new base station sending a handoff join complete signal to said mobile terminal confirming establishment of said remaining portion of said new communication connection.

24. A method for mobile communication connections and routing in a network according to claim 23 wherein said step (f) comprises the steps of:
(f1) said crossover switch sending an end of stream OAM cell to said mobile terminal via said established communication connection;
(f2) said crossover switch changing a first entry in a virtual channel routing table such tht further data cell transmission from said crossover switch to said mobile terminal will be over said new communication connection;
(f3) said crossover switch starting to transmit all data cell transmission to said mobile terminal to said second base station;
(f4) said second base station starting to buffer, in order, data cell in said second base station data buffer.

25. A method for mobile communication connections and routing in a network according to claim 24 wherein said step (g) comprises the steps of:
(g1) said mobile terminal returning said end-of-stream OAM cell to said second base station via said cross over switch;
(g2) said mobile terminal stopping all data cell transmission to said crossover switch and starting to buffer, in order, data cell in said mobile terminal data buffer.

26. A method for mobile communication connections and routing in a network according to claim 12 wherein said step (j) comprises the steps of:
(j1) said mobile terminal sending a start-of-stream OAM cell to said second base station;
(j2) said mobile terminal sending buffered data cell in first in, first out, order to said second base station;
(j3) said mobile terminal stopping buffering of data cell; and
(j4) said mobile terminal resuming normal data cell transmission.

27. A method of mobile communication connections and routing in a network according to claim 26 wherein said step (k) comprises the steps of:
(k1) after receiving said end of stream OAM cell, said crossover switch changing a second entry in said virtual channel routing table such that further data cell transmission from said mobile terminal to said crossover switch will be over said new communication connection;
(k2) said second base station returning said start of stream OAM cell to said mobile terminal;
(k3) said second base station sending buffered data cell in first in, first out, order to said mobile terminal over said new communication connection;
(k4) said second base station stopping buffering of data cell; and
(k5) said second base station switch resuming normal data cell transmission.
